# EUROPEAN PATENT APPLICATION

(11) **EP 1 622 333 A1**
(43) Date of publication of application: **01.02.2006**
(21) Application number: 04291931.6
(22) Date of filing: 29.07.2004
(51) Int. Cl.: H04L 29/06, G06F 1/00

(54) **Method and apparatus for minimally onerous and rapid authentification**

(71) Applicant: Sun Microsystems France S.A., 78142 Vélizy cedex (FR)
(72) Inventor: Montenegro, Gabriel Sun Microsystems France S.A., 78142 Velizy Cedex (FR)
(74) Representative: Weihs, Bruno Konrad

(57) **Abstract**

A method for sending data from a second node (102) to a first node (100), including generating a hashed message authentication code (M) using a key and data, sending the hashed message authentication code (M) to the first node (100), generating a nonce in response to receiving the hashed message authentication code (M) by the first node (100), sending the nonce to the second node (102), sending the nonce, the key (K) and data (D) to the first node in response to the second node (102) receiving the nonce, verifying the hashed message authentication code (M) by the first node (100) using the key (K) and data (D), if the hashed message authentication code (M) is verified: generating a first representation on the first node (100) and a second representation on the second node (102), wherein the first representation and the second representation are associated with the key (K), and verifying that the first representation matches the second representation using an authentic channel (110).

## Description

### Background

Dramatic advances in computer technology presently make it possible to integrate a significant amount of computing power into small portable computing devices, such as cell phones and personal digital assistants (PDAs). This has led to a proliferation of networked devices over the past few years. Due to a large increase in the number of networked devices, the Internet Protocol version 4 (IPv4) address space, which is based on a 32-bit long address format, will soon run out of usable addresses. To solve this problem, Internet Protocol version 6 (IPv6) was proposed. IPv6 defines a 128-bit long address format, which is believed to provide a sufficient number of addresses to accommodate all networked devices.

As larger numbers of devices are able to communicate with each other across the Internet and other ad hoc networks, a number of security threats can arise. One issue is the address ownership problem: how does one prove that a device legally owns an address (i.e., that the device is not stealing an address belonging to another device)?

A recently proposed Crypto-Based Identifier (CBID) scheme can be used to remedy this problem. CBIDs are derived from cryptographic keys. More specifically, a given device in a network can be associated with a unique private-public key pair, the CBID may then be derived from the public key. The derivation of the CBID typically involves performing a secure hash on the public key associated with the device and using the result as a basis to produce a CBID. As a result, a CBID can be verifiably associated with the public key associated with the device. Because the CBID contains unique identification (*i.e*., part of the result of applying the secure hash of the public key), one may readily verify the device.

While the CBID provides a means to verify which device one is communicating with, the CBID does not provide a means to authenticate the user of the device. Thus, how does a user ensure that who she is communicating with? User authentication can be accomplished through the public key infrastructure. However, one cannot always assume that the public key infrastructure is available. For example, when two users wish to communicate with each other through wireless devices, and the area they are located in does not have any wireless connectivity to the Internet, neither of the devices is capable of accessing an Internet-based public key infrastructure.

In the absence of a public key infrastructure, an alternative approach is to use existing authenticated (but not necessarily secret) human communication channels, such as visual or audio communications, to authenticate users and to bootstrap secure communications. For example, if Alice wishes to communicate with Bob through wireless devices in a public place, Alice's device needs to identify Bob's device. To achieve this, Bob can verbally communicate to Alice his device's address or identifier, which can be represented as a string of symbols, and Alice can then enter this string of symbols into her device. [denigration]

One method of authenticating a device and the user of the device using the aforementioned human communication channel is to convey the CBID of the device that is to be authenticated to the device performing the authentication over a communication channel. The authenticating device and the device to be authenticated may independently convert the CBID of the device to be authenticated into a human readable character string (i.e., a set of words) using, for example, a one-time-password dictionary. The human readable character string generated by both the authenticating device and the device to be authenticated are then compared over an existing authenticated human communication channel (e.g., speaking over the phone, speaking in person, email, etc.). The human readable character string typically contains 8-10 four letter words.

### Summary

In general, in one aspect, the invention relates to a method for sending data from a second node (102) to a first node (100), comprising generating a hashed message authentication code (M) using a key and data, sending the hashed message authentication code (M) to the first node (100), generating a nonce in response to receiving the hashed message authentication code (M) by the first node (100), sending the nonce to the second node (102), sending the nonce, the key (K) and data (D) to the first node (100) in response to the second node (102) receiving the nonce, verifying the hashed message authentication code (M) by the first node (100) using the key (K) and data (D), if the hashed message authentication code (M) is verified generating a first representation on the first node (100) and a second representation on the second node (102), wherein the first representation and the second representation are associated with the key (K), and verifying that the first representation matches the second representation using an authentic channel (110).

In general, in one aspect, the invention relates to a method for establishing a secure communications channel (108) between a first node (100) and a second node (102), comprising generating a first hashed message authentication code using a first key and a first asymmetric key, sending the first hashed message authentication code to the first node (100), generating a first nonce in response to receiving the first hashed message authentication code by the first node (100), sending the first nonce to the second node (102), sending the first nonce, the first key and the first asymmetric key to the first node (100) in response to the second node receiving the first nonce, verifying the first hashed message authentication code by the first node (100) using the first key and the first asymmetric key, if the first hashed message authentication code is verified: generating a first representation on the first node (100) and a second representation on the second node (102), wherein the first representation and the second representation are associated with the first key, verifying that the first representation matches the second representation using an authentic channel (110), generating a second hashed message authentication code using a second key and a second asymmetric key, sending the second hashed message authentication code to the second node (102), generating a second nonce (102) in response to receiving the second hashed message authentication code by the second node (102), sending the second nonce to the first node (100), sending the second nonce (102), the second key and the second asymmetric key to the second node (102) in response to the first node (100) receiving the second nonce, verifying the second hashed message authentication code by the first node (100) using the second key and the second asymmetric key, if the second hashed message authentication code is verified: generating a third representation on the first node (100) and a fourth representation on the second node (102), wherein the third representation and the fourth representation are associated with the second key, verifying that the third representation matches the fourth representation using the authentic channel (110), and establishing a secure communications channel (108) using the first asymmetric key and the second asymmetric key.

Further, embodiments of the invention relates to verifying the first nonce sent from the second node (102) by the first node (100) to determine whether the first nonce is valid, and aborting establishing the secure communications channel (108), if the second nonce is not valid, verifying the second nonce sent from the first node (100) by the second node (102) to determine whether the first nonce is valid, and aborting establishing the secure communications channel (108), if the second nonce is not valid.

In addition, in certain aspects of the invention, the first representation, the second representation, the third representation, and the fourth representation are generated using a one-time-password dictionary. In addition, in certain aspects of the invention, the first representation, the second representation, the representation, and the fourth representation correspond to fractal images. In addition, in certain aspects of the invention, the first representation, the second representation, the third representation, and the fourth representation correspond to audio files.

In general, in one aspect, the invention relates to a system, comprising a first node (100) and a second node (102), wherein the first node (100) is operatively connected to the second node (102) via a communication channel (108), and wherein the first node (100) is operatively connected to the second node (102) using an authentic channel (110), and wherein the first node (100) is configured to generate a hashed message authentication code using a key (K) and data (D), send the hashed message authentication code to the first node (100), generate a nonce in response to receiving the hashed message authentication code by the first node (100), send the nonce to the second node (102), send the nonce, the key (K), and data (D) to the first node (100) in response to the second node (102) receiving the nonce, verify the hashed message authentication code by the first node (100) using the key (K), and data (D), if the hashed message authentication code is verified: generate a first representation on the first node (100) and a second representation on the second node (102), wherein the first representation and the second representation are associated with the key (K), and verify that the first representation matches the second representation using an authentic channel (110).

Other aspects of the invention will be apparent from the following description and the appended claims.

### Brief Description of Drawings

Figure 1 shows a system in accordance with one embodiment of the invention.

Figure 2 shows a flow diagram in accordance with one embodiment of the invention.

### Detailed Description

Exemplary embodiments of the invention will be described with reference to the accompanying drawings. Like items in the drawings are shown with the same reference numbers.

In an embodiment of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

In general, embodiments of the invention relate to a method and apparatus for transferring data between nodes in a network using a communication channel and a separate authentic channel. Embodiments of the invention provide a method and apparatus to transfer data in a manner that ensures authenticity (i.e., the source of the data is authenticated) and integrity of the data *(i.e.,* the data that is received is identical to the data sent). More specifically, embodiments of the invention provide a method and apparatus to transfer data in the form of a Hashed Message Authentication Code (HMAC) (i.e., a message authentication code generated using a keyed-hashing mechanism) and then subsequently authenticating the key used to generate the HMAC using a separate authentic channel. Further, embodiments of the invention provide a method and apparatus for authenticating the key used to generate the HMAC using human readable representation, such as, a set of words, sounds, images (*e.g*., fractal images), etc. Further, embodiments of the invention provide a method for transferring data, such as public keys, etc. that may be used to establish a secure communications channel.

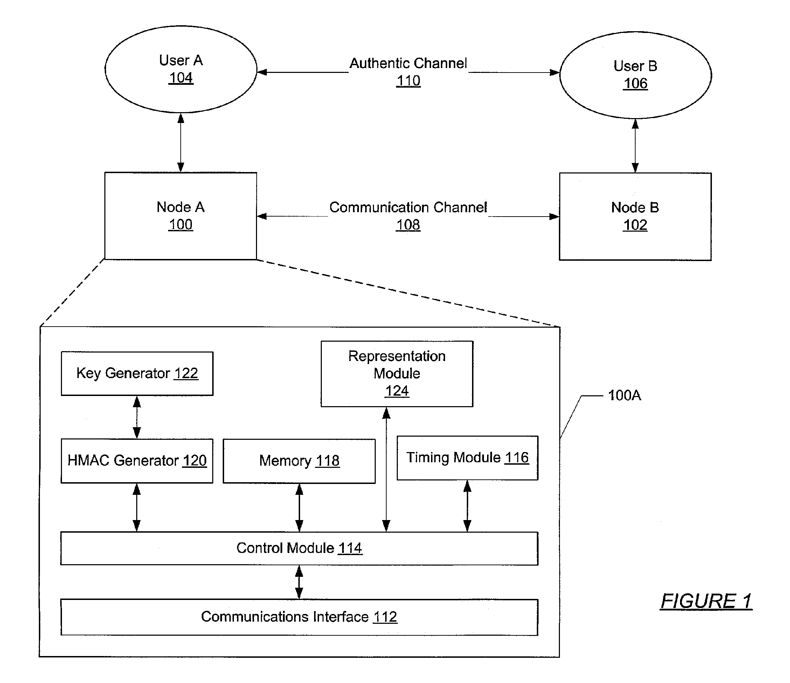

Figure 1 shows a system in accordance with one embodiment of the invention. In the particular embodiment shown in Figure 1, the system includes two nodes *(i.e.,* Node A (100) and Node B (102)). The nodes *(i.e.,* Node A (100) and Node B (102)) typically communicate and transfer data via a communication channel (108). The communication channel (108) may correspond to any method of transferring data between the nodes *(i.e.,* Node A (100) and Node B (102)), such as a local area network (wired, wireless, or a combination of both), a wide area network (wired, wireless, or a combination of both), a Bluetooth network, a global system for mobile communication (GSM) network, etc.

As shown in the expanded view (100A) of Node A (100), each node may include a control module (114) that is typically configured to control the overall operation of the node. Further, the control module (114) may be configured to manage other components within the node (100). In the embodiment shown in Figure 1, Node A (100) includes the following components: a HMAC generator (120), a key generator (122), a memory (118), a representation module (124), a timing module (116), and a communications interface (112). Each of the components is described below in detail. The key generator (122) is configured to generate a key, for example, using a random number generator, etc. The HMAC generator (120), in one embodiment of the invention, is configured to obtain data, to be sent, from the memory (118), and the key from the key generator (122) and generate a HMAC of the data using the key.

In one embodiment of the invention, the HMAC generator (120) uses a cryptographic hash function such as Secure Hash Algorithm-1 (SHA-1) or Message Digest 5 (MD 5) to generate the HMAC. An implementation of a mechanism for HMAC is outlined in RFC 2104 (http://rfc.net/rfc2104.html) Those skilled in the art will appreciate that while the aforementioned description of the invention uses a HMAC mechanism, any mechanism that provides the same (or similar) characteristics as the HMAC mechanism may be used and is within the scope of the invention.

Continuing with the discussion of Figure 1, in one embodiment of the invention, the representation module (124) includes functionality to convert the key (either generated by the key generator (122) of the node or received from another node) into a human identifiable form *(i.e.,* a form that can be easily identified by humans such as a set of words, an image, an audio file, etc.). In one embodiment of the invention, the representation module (124) is configured to convert the key into a set of words using a one-time-password dictionary, such as the one described in RFC 1938 (http://rfc.net/rfc1938.html). In one embodiment of the invention, the timing module (116) is configured to generate a nonce, and verify the validity of the nonce. In one embodiment of the invention, the nonce refers to a mechanism that is included/embedded in a message, such as a time stamp or any other marker. The nonce is used to limit the validity of the message to a certain period of time by providing information to the node (or any inquiring process) that indicates when the message was sent. The operation of the nonce with respect to the invention is described below. Finally, the node includes a communications interface (112) that is configured to send and receive data (*e.g*., data to send to the other node, HMAC of the data being sent, keys, nonce, etc.) to/from other devices (e.g., nodes).

Further, as shown in Figure 1, User A (104) is using Node A (100) and User B (106) is using Node B (102). In addition, User A (104) and User B (106) may communicate via an authentic channel (110). The authentic channel (110) may be, for example, speaking over the phone, speaking in person, email, meeting in person and comparing the representations, etc. The authentic channel (110) is not required to be confidential only authentic (*i.e*., need to know who you are communicating with).

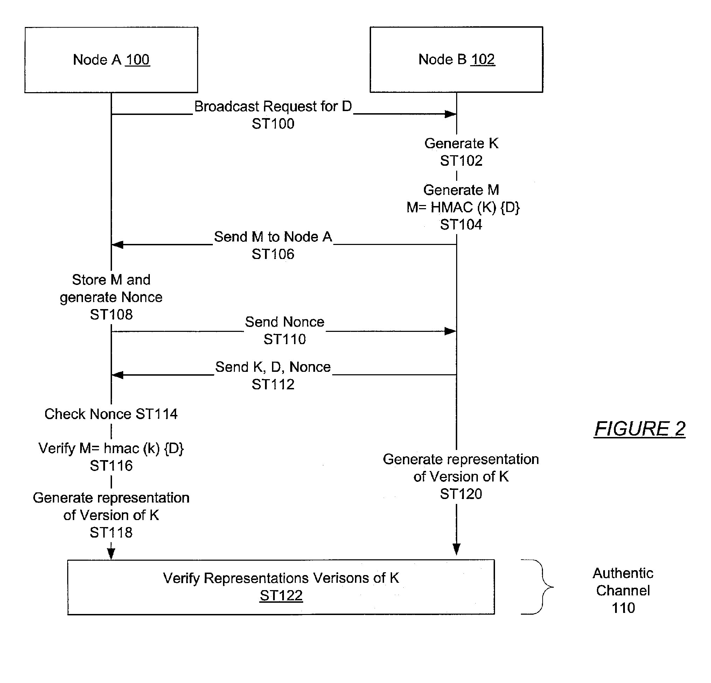

Using the nodes shown in Figure 1 (or nodes with similar functionality), the following method may be used to communicate data in a manner that maintains authenticity and integrity of the data. Figure 2 shows a flow diagram of the method in accordance with one embodiment of the invention. The initiation of data communication may be performed in a number of different ways. The manner used to initiate the transfer of data may depend on the type of data. For example, if Node A (100) and Node B (102) want to establish a secure communication channel, using, for example, a public-key infrastructure, then Node A (100) may initiate communication by sending out a broadcast request for Node B's (102) public key (or any other data (D)) that is required to establish a secure communication channel between Node A (100) and Node B (102)) (ST100).

Alternatively, if Node B (102) only wants to send data (D) to Node A (100) and does not necessarily want to establish a secure communications channel, then Node B (102) would initiate the communication of data (D) starting at ST102. Regardless of which node initiates the communication of data (D), once the communication of data (D) has been initiated, the node sending the data (i.e., Node B (102) in Figure 2) generates a key (K) (ST102). The length of the key (K) depends on the implementation. However, those skilled in the art will appreciate that the length of the key (K) should be such that the key cannot be guessed in the time it takes to send the nonce (ST110) and receive the nonce (ST112) (both steps are described below). Thus, depending on the state of the technology, etc., the key (K) may be, for example, between 44-55 bytes.

Once the key has been generated, the key (K) is used as an input into the HMAC function, along with the data (D) to be transferred, to generate a message (M) (ST104). The message (M) is subsequently sent to Node A (100) (ST106). Node A (100) upon receiving the message (M), stores the message (M), and then generates a nonce (ST108). The nonce is subsequently communicated to Node B (102). Node B (102), in response to receiving the nonce from Node A (100), sends the key (K), the data (D), and the nonce, to Node A (100) (ST112).

Node A (100) upon receiving the key (K), the data (D), and the nonce, checks the nonce to determine whether the nonce is valid (ST114). In particular, the nonce is used as a mechanism to circumvent man-in-the-middle attacks, by setting a time limit in which Node B (102) has to respond to Node A (100) once Node A (100) sends the nonce to Node B (102). Thus, if Node A (100) does not receive a message containing the nonce, the key (K), and the data (D), within a certain time period (as tracked by the nonce and verified by Node A (100)), the transfer of data (D) is terminated.

Once Node A (100) has checked that the nonce is valid (i.e., that Node B (102) responded within the allowed time period), then Node A (100) proceeds to verify the message (M). Node A (100) verifies the message (M) sent by Node B (102) (ST116) by independently calculating the message (M') using the key (K) and the data (D) received in ST112, then comparing the calculated message (M') with the message (M). If the calculated message (M') matches the message (M) received in ST106, then the message (M) is verified. At this stage, the integrity of data (D) has been verified but the authenticity has not been established.

After Node A (100) has verified the integrity of the data (D), Node A (100) generates a representation of the key (K) that it received from Node B (102) in ST112 (ST118). As described above, the representation may be in any human identifiable form, such as, a set of words, an image or set of images, an audio file or set of audio files, etc. Node B (102) also independently generates a representation (in the same form as Node A (100)) of the key (K) that it used to generate the message (M) (ST120). Those skilled in the art will appreciate that Node B (102) may generate a representation of the key (K) at any time after the key (K) is generated. Similarly, Node A (100) may generate a representation of the key (K) anytime after the key (K) is received from Node B (102).

Once each node has generated a representation of the key (K), nodes (via the users of the nodes) compare the representations of the key using an authentic channel (110) (ST122). If the representations of the key (K) match, then Node A (100) is said to have authenticated that the message (M) (and hence the data (D)) was in fact sent from Node B (102). At this stage, the communication of data (D) between Node A (100) and Node B (102) is complete.

However, as noted above, depending on the data (D) communicated between the nodes, the data (D) may be used to establish a secure communications channel. Thus, the aforementioned method of communication data (D) may be used to bootstrap secure communication between the nodes. For example, the aforementioned method could be applied twice, once to communicate Node A's (100) public key to Node B (102), and once to communicate Node B's (102) public key to Node A (100). Once the public keys have been exchanged, the nodes may establish a secure communications channel using the authentic public-keys.

Those skilled in the art will appreciate that the length of the key (K) and the use of the nonce, in the aforementioned invention, may be used to effectively circumvent man-in-the-middle attacks. In particular, the length of the (K) must be chosen such that if a third party intercepts (or otherwise obtains) the message (M) sent in ST106, the third party will not be able to determine (for example, using a brute-force attack) the key (K) prior to Node B (102) sending the key (K) in ST112. While the length of the key (K) is an important factor in circumventing man-in-the-middle attacks, if the third party is capable of controlling the packet flow between Node A (100) and Node B (102), then the third party may still obtain the key (K) by delaying communication between the nodes, thereby giving the third party additional time to determine the key (K). To circumvent this method of attack, the nonce is used as a means to terminate the communication between the nodes if the communication time reaches a dangerous time limit *(i.e.,* a time when a man-in-the-middle attack may be successful based on the length of the key (K) and the third party's processing speed).

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for sending data from a second node (102) to a first node (100), comprising:
generating a hashed message authentication code (M) using a key and data;
sending the hashed message authentication code (M) to the first node (100);
generating a nonce in response to receiving the hashed message authentication code (M) by the first node (100);
sending the nonce to the second node (102);
sending the nonce, the key (K) and data (D) to the first node (100) in response to the second node (102) receiving the nonce;
verifying the hashed message authentication code (M) by the first node (100) using the key (K) and data (D);
if the hashed message authentication code (M) is verified:
generating a first representation on the first node (100) and a second representation on the second node (102), wherein the first representation and the second representation are associated with the key (K); and
verifying that the first representation matches the second representation using an authentic channel (110).

2. The method of claim 1, further comprising:
verifying the nonce sent from the second node (102) by the first node (100) to determine whether the nonce is valid; and
aborting the sending of the second node (102) by the first node (100), if the nonce is not valid.

3. The method of claim 1, further comprising:
generating the hashed message authentication code (M) in response to the first node (100) requesting data (D).

4. The method of claim 1, wherein the first node (100) requests data (D) using at least one selected from the group consisting of a broadcast message and a multicast message.

5. The method of claim 1, wherein data (D) comprises an asymmetric key.

6. The method of claim 5, wherein the asymmetric key is used to bootstrap a secure communications channel between the first node (100) and the second node (102).

7. The method of claim 1, wherein the first representation and the second representation are generated using a one-time-password dictionary.

8. The method of claim 1, wherein the first representation and the second representation correspond to fractal images.

9. The method of claim 1, wherein the first representation and the second representation correspond to audio files.

10. The method of claim 1, wherein the authentic channel is a low bandwidth channel.

11. A system, comprising:
a first node (100) and a second node (102),
wherein the first node (100) is operatively connected to the second node (102) via a communication channel (108), and
wherein the first node (100) is operatively connected to the second node (102) using an authentic channel (110), and wherein the first node (100) is configured to:
generate a hashed message authentication code using a key (K) and data (D);
send the hashed message authentication code to the first node (100);
generate a nonce in response to receiving the hashed message authentication code by the first node (100);
send the nonce to the second node (102);
send the nonce, the key (K), and data (D) to the first node (100) in response to the second node (102) receiving the nonce;
verify the hashed message authentication code by the first node (100) using the key (K), and data (D);
if the hashed message authentication code is verified:
generate a first representation on the first node (100) and a second representation on the second node (102), wherein the first representation and the second representation are associated with the key (K); and
verify that the first representation matches the second representation using an authentic channel (110).

12. The system of claim 10, wherein data comprises an asymmetric key.

13. The system of claim 11, wherein the asymmetric key is used to bootstrap a secure communications channel (108) between the first node (100) and the second node (102).

14. The system of claim 10, wherein the first representation and the second representation are generated using a one-time-password dictionary.
